# EUROPEAN PATENT SPECIFICATION

(11) **EP 2 548 946 B1**
(45) Date of publication and mention of the grant of the patent: **29.04.2015**
(21) Application number: 11174918.0
(22) Date of filing: 21.07.2011
(51) Int. Cl.: C12N 1/18, A21D 8/04, A21D 10/00

(54) **Process for producing granular and microbiologically active natural yeast**
Verfahren zur Herstellung körniger und mikrobiologisch aktiver, natürlicher Hefe
Procédé de production d'une levure naturelle microbiologiquement active

(43) Date of publication of application: 23.01.2013
(73) Proprietor: Vaiani Lieviti S.r.l., 54011 Aulla (MS), Frazione Pallerone (IT)
(72) Inventor: VAIANI, Giorgio, 19020 Bolano, Frazione Ceparana SP (IT)
(74) Representative: Modiano, Micaela Nadia

(56) References cited:
- EP-A1- 1 498 477
- IT-B- 1 136 191
- PYLER E J ED - PYLER E J: "Baking science & technology, Sourdoug Hearth Bread, Basics of Rye Sourdough Fermentation", 1 January 1988 (1988-01-01), BAKING SCIENCE & TECHNOLOGY, SOSLAND PUBLISHING, KANSAS CITY, USA, PAGE(S) 778 - 781,794, XP002598711, ISBN: 978-0-929005-02-7 * the whole document *

## Description

The invention relates to a process for obtaining a granulated and microbiologically alive and active natural yeast, it describes the yeast itself and its use in the bakery products industry.

The bread and confectionery industry bases its production processes on the use of two different yeasts:
a) Use of compressed yeast; also known as brewer's yeast, this type of yeast comprises exclusively *Saccharomyces cerevisiae* yeast, which acts only by means of alcoholic fermentation, leading to a production of alcohol and carbon dioxide. The dough that derives from the use of brewer's yeast has an alkaline pH; for this reason, bakery products that derive from this fermentation have a short life, because they are subject to the formation of molds. Products that derive from a fermentation based on compressed yeast have an irregular texture and poor digestibility of the finished product.
b) Use of natural yeast; also known as sourdough or natural leaven; the expression "natural yeast" references a dough made of flour and water acidified by a complex of yeasts and lactic bacteria capable of starting fermentation of the doughs for bakery and confectionery products. The main representatives of the complex of yeasts are several species of *Saccharomyces* (*S. exiguus, S. cerevisiae, S. ellipsodeus*) and *Candida;* among the bacteria that constitute natural yeast, the lactic ones of the Lactobacillus genus are of fundamental importance (such as for example *L*. *brevis, L. sanfranciscensis, L. casei, L. plantarum, L. acidophilus,* et cetera), *Leuconostoc, Pediococcus* and *Weissella.* The term "sour" derives from the fact that natural yeast, with respect to compressed yeast, has acid organoleptic characteristics. The acidity that is perceived derives mainly from the metabolism of the symbiotic cultures of yeasts and lactobacilli that are present in sourdough. In fact, in addition to the usual alcoholic fermentation that occurs also with compressed yeasts, sourdough also performs a lactic fermentation, with consequent production of lactic acid and acetic acid. The acid environment reduces, in this manner, the possibility of contamination by other non-acidophilic bacterial species, such as for example molds, ensuring in this manner better preservation of the finished product. Moreover, the carbon dioxide that derives from the lactic fermentation induces the formation of a finer and more regular alveolation than a bread product made with compressed yeast; this phenomenon is due to a slower and more gradual production of carbon dioxide because of the longer duration of the fermentation process. Other acknowledged advantages of natural leavening are the production of products that have a characteristic taste and fragrance, said taste and fragrance being enhanced by the formation of volatile organic substances and aromatic products that form during baking between amino acids and sugars; moreover, the color of the crust of the bakery product is darker, thanks to Maillard's reaction, which occurs between the amino acids and the sugars during baking. Finally, the great advantage that derives from the use of natural leavening is the provision of bakery products that are more digestible and assimilable, because the proteolysis performed by lactic bacteria entails a greater digestibility of proteins, with consequent increased bioavailability of amino acids and mineral salts, facilitating the work of the digestive system. These products predigested by natural yeast cause fewer problems of *S*. *cerevisiae* intolerance, a phenomenon that occurs with products obtained by using exclusively brewer's yeast.

In contrast with all these advantages, natural leavening suffers from two drawbacks that limit its massive use in the industrial field of bakery products.

The first drawback is constituted by the fact that the preparation of natural yeast is laborious and complex; the preparation of natural yeast comprises all the operations needed in order to maintain the sourdough microbiologically active and ready to be used in the doughs. The symbiotic action of the cultures that constitute the sourdough can be easily compromised by common parameters, such as temperature (if it is too low it slows down activity, if it is too high it kills the yeast cultures), the consistency of the dough (if it is excessively hard, alveolation may be compromised because the formation of bubbles of carbon dioxide gas, which derive from the fermentation processes, would be prevented) or, for example, an excessive presence of fats and sugars (which remove the availability of water to the microorganisms that constitute natural yeast). Moreover, the execution times of the preparatory step are long and require particular attention in order to preserve the microbiological activity of natural yeast.

The second disadvantage that derives from the use of natural leavening is constituted by the environmental operating conditions of the personnel assigned to the preparation of natural yeast.

The long preparation and execution times, and the demand for specialized personnel for the preparation of natural yeast, have a substantial impact on the economy of the production processes; for this reason, the use of natural leavening is prohibitive for small-medium producers of bakery products. At the expense of a better quality of the baked product, most industrial producers of bakery products use a leavening based on compressed yeast, which is quicker and easier to perform, since the only microorganism involved is the S. *cerevisiae* yeast.

Processes are known in the background art (IT1136191 B; PT1498477 E; ITGE20040044 A1; ITGE20040037 A1) which allow to obtain a natural yeast which is fine and granular and characterized by high stability over time. These natural yeasts can be used by users avoiding the treatment and initial preparation of the sourdough; advantageously, the absence of this passage offers a reduction in the costs of the specialized personnel employed in production and a reduction of the production times of bakery products. However, granular natural yeasts that derive from these processes suffer from the drawback that they must be triggered in order to be active in the leavening process. This triggering step entails the addition of a starter, constituted by a minimum quantity of compressed yeast.

The aim of the present invention is to obtain a better leavening process (in terms of economic saving for equal organoleptic properties of the leavened product).

Another object of the present invention is to obtain a granular natural yeast that does not entail activation by compressed yeast, because it is already microbiologically alive and active.

A further object of the present invention is to obtain a granular natural yeast that is microbiologically alive and active and can ensure a long preservation over time.

Another object of the present patent is to obtain bakery products that are more digestible and cause fewer problems of S. *cerevisiae* intolerance.

This aim and these and other objects are achieved by the process for producing granular and microbiologically alive and active natural yeast according to the present invention comprising the step of mixing at least one first and one second leavened dough to obtain a third dough, said first and second leavened doughs each comprising sourdough, strong flour and water, and the step for granulating said third dough obtained from said mixing so as to obtain said natural yeast having a total humidity of 16% or more.

Another aspect of the disclosure is related to a granulated and microbiologically alive and active natural yeast that can be obtained with the process described in the present invention.

Another aspect of the present disclosure is related to the use of the microbiologically alive and active granular natural yeast that can be obtained with the process of the present invention in order to produce bakery products.

Further characteristics and advantages of the invention will become better apparent from the detailed description of a preferred but not exclusive embodiment of the process for producing granular and microbiologically active natural yeast according to the present invention.

According to the present invention a process, for producing a natural yeast has been found which comprises the step of mixing at least one first and one second leavened dough in order to obtain a third dough, said first and second leavened doughs each comprising sourdough, strong flour and water, and the step for granulating said third dough derived from said mixing so as to obtain said natural yeast having a total humidity of 16% or more.

The expression *"strength of flour"* references the ability of the flour to withstand treatment in a specific time period. The strength of the flour derives from its protein content, in particular from the content of gliadin and glutenin. These two proteins, if placed in an aqueous medium, form a protein complex known as gluten, which constitutes the supporting structure of the dough, represented as *strength of flour.* According to the quantity and quality of the gluten present in the flour, the dough with water shall be characterized by resistance (P) and elasticity (L) according to the time required for leavening. The strength of flour is expressed with a parameter W, termed bread making factor; it derives from the area of the chart given by P and L, illustrated with the Chopin alveograph. A high value of W indicates a high content of gluten and therefore a high resistance and tenacity of the flour. Generally speaking, flours that have W up to 170 are designated as *soft*; flours with W that can vary between 180 and 260 are designated as *medium*; flours with W that can vary between 280 and 350 are designated as *strong,* and those with W higher than 350 are instead designated as *special.* Strong flours are used typically for producing classic bread, egg pasta, pizza and confectionery with long leavening. They generally absorb 65% to 75% of their weight in water.

In a preferred embodiment, said process for producing a natural yeast comprises the steps of:
I.a) leavening a dough comprising a mixture of sourdough, strong flour, and water, in a weight ratio equal to 0.5-1.5 : 1.5-4.5 : 0.6-1.9;
I.b) leavening a dough comprising a mixture of the dough obtained from step I.a), strong flour, and water, in a weight ratio equal to 0.5-1.5 : 1.5-4.5 : 0.6-1.9;
I.c) preparing a dough comprising a mixture of the dough obtained from step I.b), strong flour, and water, in a weight ratio equal to 0.5-1.5 : 1.5-4.5 : 0.6-1.9;
I.d) rolling the dough obtained from step I.c), said rolling comprising the steps of leavening the dough obtained from step I.c) and subsequently rolling said leavened dough;
I.e) reducing into particles the sheets obtained from step I.d);
so as to obtain said first leavened dough.

Preferably, said process for producing a natural yeast comprises the steps of:
II)
   II.a) leavening a dough comprising a mixture of sourdough, strong flour, and water, in a weight ratio equal to 0.5-1.5 : 1.5-4.5 : 0.6-1.9;
   II.b) leavening a dough comprising a mixture of the dough obtained from step II.a), strong flour, and water, in a weight ratio equal to 0.5-1.5: 1.5-4.5 : 0.6-1.9;
   II.c) leavening a dough comprising the dough from step II.b), strong flour, and water, in a weight ratio equal to 0.5-1.5 : 1.5-4.5 : 0.6-1.9;
   so as to obtain said second leavened dough.

Preferably, said process for producing a natural yeast comprises the step of:
III)
   III.a) mixing the first and second leavened doughs in a weight ratio equal to 1:1 so as to obtain a third dough.

Preferably, the strength of the flour used in the process described in the present invention has a bread making factor (W) comprised between 330 and 350.

Preferably, the mixtures of steps Ia, Ib, IIa and IIb are obtained by mixing in a temperature range comprised between 24 and 26°C.

Preferably, the leavenings cited in the process of the present invention occur for 4 hours, at 30°C and with a relative humidity of 80%.

Preferably, the dough obtained from step I.c) is left to rest for 12 hours before moving on to step I.d).

Preferably, the reduction into particles of step I.e) occurs by mechanical passage in a mill, for 15 seconds at 150°C.

Preferably, said first leavened dough of the process according to the present invention has a total humidity comprised between 4% and 6%.

Preferably, the rolling process of step I.d) entails rolling into dough rectangles measuring 10 x 5 x 1.5 cm.

Preferably, the reduction into particles of step I.e) occurs in high-efficiency pulverizing mills (P.H.R.).

Preferably, the reduction into particles of step I.e) is repeated for at least two cycles. The double mechanical passage is due to the fact that not all the particles, if subjected to high temperature, are able to lose a sufficient quantity of water to be propelled by the air jet, and selected in a separator in order to be used in the following steps. By subjecting the particles to a further cycle for reducing into particles, the loss of relative density of said particles and their selection for the subsequent steps are facilitated.

Preferably, the mixing of step III.a) occurs for a minimum time of 6 minutes.

Preferably, the granulation of the dough of the process of the present invention produces granulates having a total humidity of 18%.

Preferably, the granulation process comprises two passes of the third dough obtained from step III.a) in a granulator having a 10-mm mesh and into a granulator having a 5-mm mesh.

In a preferred embodiment, the steps of the process of the present invention are characterized as follows:
I)
   I.a) leavening of a dough comprising a mixture of sourdough, strong flour having a value of W comprised in the 330-350 interval, and water, in a weight ratio equal to 1 : 3 : 1.3, obtained by mixing in an interval comprised between 24 and 26°C, wherein said leavening occurs for 4 hours at 30°C with a relative humidity of 80%;
   I.b) leavening of a dough comprising the mixture of the dough obtained from step I.a), strong flour having a value of W comprised in the 330-350 interval, and water, in a weight ratio equal to 1 : 3 : 1.3, obtained by mixing in a range comprised between 24 and 26°C, wherein said leavening occurs for 4 hours at 30°C and with a relative humidity of 80%;
   I.c) preparing a dough comprising the mixture of the dough obtained from step I.b), strong flour having a value of W comprised in the 330-350 interval, and water, in a weight ratio equal to 1 : 3 : 1.3, wherein the dough obtained from said preparation is left to rest for 12 hours;
   I.d) rolling the dough obtained from step I.c), said rolling comprising the steps of leavening the dough obtained from step I.c) and subsequently rolling said leavened dough into rectangles measuring 10 x 5 x 1.5 cm;
   I.e) reducing into particles the sheets obtained from step I.d) by mechanical passage, repeated for two cycles, of said sheets in a mill for 15 seconds at 150°C, wherein the particles derived from said reduction into particles have a total humidity level comprised between 4% and 6%;
II)
   II.a) leavening of a dough comprising a mixture of sourdough, strong flour having a value of W comprised in the 330-350 interval, and water, in a weight ratio equal to 1 : 3 : 1.3, obtained by mixing in an interval comprised between 24 and 26°C, wherein said leavening occurs for 4 hours, at 30°C and at a relative humidity of 80%;
   II.b) leavening a dough comprising the mixture of the dough obtained from step I.a), strong flour having a value of W comprised in the 330-350 interval, and water, in a weight ratio equal to 1 : 3 : 1.3, obtained by mixing in an interval comprised between 24 and 26°C, wherein said leavening occurs for 4 hours, at 30°C and at a relative humidity of 80%;
   II.c) leavening a dough comprising the dough obtained from step II.b), strong flour having a value of W comprised in the 330-350 range, and water, in a weight ratio equal to 1 : 3 : 1.3, wherein said leavening occurs for 4 hours, at 30°C and with a relative humidity of 80%;
III)
   III.a) mixing the dough from step I) and the dough from step II) in a weight ratio equal to 1:1, so as to obtain a third dough, for a minimum time of 6 minutes;
   III.b) granulating said third dough obtained from step III.a), wherein said granulation produces granulates having a total humidity of 18%.

The result of this process is a fine, granulated, microbiologically alive and active natural yeast. Thanks to the total humidity of the natural yeast obtained by way of the process of the present invention, the end user may advantageously use said natural yeast as it is, avoiding the addition of compressed yeasts in order to activate the symbiotic culture of microorganisms present in the sourdough. Therefore, remarkable advantages are obtained in terms of reducing costs and time at industrial production level.

The natural yeast obtained with the process of the present invention offers the further advantage that it can be preserved for a very long time and at the same time is already microbiologically alive and active.

Finally, products leavened with the natural yeast obtained with the process according to the present patent application are more digestible and cause fewer S. *cerevisiae* intolerance problems, maintaining at the same time excellent organoleptic qualities.

Another aspect of the disclosure relates to a microbiologically alive and active granular natural yeast that can be obtained from the process described in the present patent application.

Another aspect of the present disclosure is related to the use of the microbiologically alive and active granular natural yeast that can be obtained with the process of the present disclosure in order to produce bakery products; preferably, the bakery products are confectionary products and bread products.

By way of example, the Examples section presents an explicative but non-limiting case of the present invention.

### EXAMPLES

### 1.

### First step

100 g of sourdough, 300 g of strong flour, 126 ml of water, for a total weight of 526 g, are kneaded to obtain a smooth and homogeneous dough at a temperature of 24/26°C. The resulting dough is placed in a cylindrical vessel and is inserted in a leavening cell which is set (30°C, relative humidity 80%) for 4 hours. After this time has elapsed, one moves on to the next dough.

526 g of the first dough, 1578 g of strong flour, 663 g of water, for a total of 2767 g, are kneaded to obtain a smooth and homogeneous dough at a temperature of 24/26°C. The resulting dough is placed in a cylindrical vessel and is inserted in a leavening cell which is set (30°C, relative humidity 80%) for 4 hours. After this time has elapsed, one moves on to the next dough.

2767 g of the second dough are kneaded with 8301 g of strong flour and 3486 ml of water for a total of 14554 g. 100 g of product are removed from this dough because they will be used for subsequent steps. The final dough is left to rest for 12 hours. Once the 12 hours have elapsed, the obtained dough is placed in a cylindrical vessel and inserted in a leavening cell (30°C; relative humidity 80%) for 4 hours and subsequently introduced in a specific rolling mill. In this manner, a dough sheet 1.5 cm thick is obtained. The sheet is cut with the aid of circular knives into strips 5 cm wide; these strips are then cut with a transverse cutter in order to obtain a length of 10 cm; in this manner, rectangles of 10 x 5 x 1.5 cm are obtained. These rectangles are conveyed by means of a conveyor belt into a P.H.R. mill (with an operating speed of 3000 rpm). Said mill is provided with numerous metallic blades and is able to shred the 120-g dough rectangles, transforming them into small particles; these particles are struck for 15 seconds by an air jet at 150°C, thus reaching a total humidity comprised between 4% and 6%. By losing the water content, the relative density of the particles decreases; the lighter particles, in this manner, are pushed by the air jet toward a screen separator, which selects them and places them in a silo in order to be used subsequently. The particles not selected by the separator return into the P.H.R. mill for a further mechanical pass.

### Second step

100 g of sourdough, 300 g of strong flour, 126 g of water, for a total weight of 526 g, are kneaded to obtain a smooth and homogeneous dough with a temperature of 24/26°C. The obtained dough is placed in a cylindrical vessel and is inserted in a leavening cell, which is set (30°C, relative humidity 80%) for 4 hours. Once this time has elapsed, one moves on to the next dough.

526 g of the first dough, 1578 g of strong flour, 663 g of water, for a total of 2767 g, are kneaded to obtain a smooth and homogeneous dough at a temperature of 24/26°C. The obtained dough is placed in a cylindrical vessel and is inserted in a leavening cell which is set (30°C, relative humidity 80%) for 4 hours. Once this time has elapsed, one moves on to the next dough.

2767 g of the second dough are kneaded with 8301 g of strong flour and 3486 ml of water for a total of 14554 g. The resulting dough is placed in a cylindrical vessel and subsequently inserted in a leavening cell, which is set (30°C, relative humidity 80%) for 4 hours.

### Third step

The doughs obtained from the first step and the second step are mixed for at least 6 minutes in a mixer, obtaining a shredded and non-uniform product. Said product is subsequently passed into a granulator with a 5-mm mesh, obtaining a fine and homogeneous granulated product, with a total humidity of approximately 18%. The result of this granulation produces a fine, microbiologically alive and active granulated natural yeast.

## Claims

1. A process for producing natural yeast, comprising the step of mixing at least a first and a second leavened dough to obtain a third dough, said first and second leavened doughs each comprising sourdough, strong flour and water, and the step of granulating said third dough obtained from said mixing so as to obtain said natural yeast having a total humidity of 16% or more.

2. The process according to claim 1, comprising the steps of:
I.a) leavening a dough comprising a mixture of sourdough, strong flour, and water, in a weight ratio of 0.5-1.5 : 1.5-4.5 : 0.6-1.9;
I.b) leavening a dough comprising a mixture of the dough obtained from step I.a), strong flour, and water, in a weight ratio of 0.5-1.5 : 1.5-4.5 : 0.6-1.9;
I.c) preparing a dough comprising a mixture of the dough obtained from step I.b), strong flour, and water, in a weight ratio of 0.5-1.5: 1.5-4.5 : 0.6-1.9;
I.d) rolling the dough obtained from step I.c), said rolling comprising the steps of leavening the dough obtained from step I.c) and subsequently rolling said leavened dough;
I.e) reducing into particles the sheets obtained from step I.d);
so as to obtain said first leavened dough.

3. The process according to claim 1 or 2, comprising the steps of:
II)
II.a) leavening a dough comprising a mixture of sourdough, strong flour, and water, in a weight ratio of 0.5-1.5 : 1.5-4.5 : 0.6-1.9;
II.b) leavening a dough comprising a mixture of the dough obtained from step II.a), strong flour, and water, in a weight ratio of 0.5-1.5 : 1.5-4.5 : 0.6,1.9;
II.c) leavening a dough comprising the dough from step II.b), strong flour, and water, in a weight ratio of 0.5-1.5 : 1.5-4.5 : 0.6-1.9;
so as to obtain said second leavened dough.

4. The process according to any one of claims 1, 2 or 3, comprising the step of:
III)
III.a) mixing the first and second leavened doughs in a weight ratio of 1:1 so as to obtain said third dough.

5. The process according to one of the preceding claims, wherein said strong flour has a bread making factor (W) comprised in the 330-350 interval.

6. The process according to claims 2 and 3, wherein said mixtures of steps Ia, Ib, IIa and IIb are obtained by mixing in a temperature interval comprised between 24 and 26°C.

7. The process according to claims 2 and 3, wherein said leavenings occur for 4 hours, at 30°C, and with a relative humidity of 80%.

8. The process according to claim 2, wherein said dough obtained from step I.c) is left to rest for 12 hours before moving on to step I.d).

9. The process according to claim 2, wherein said reducing into particles occurs by mechanical passage of said sheets in a mill, for 15 seconds at 150°C.

10. The process according to claim 9, wherein said first leavened dough has a total humidity comprised between 4 and 6%.

11. The process according to claim 9, wherein said reducing into particles is repeated for two cycles.

12. The process according to claim 2, wherein said rolling produces rectangular dough sheets measuring 10 x 5 x 1.5 cm.

13. The process according to claim 3, wherein said mixing of step III.a) occurs for a minimum time of 6 minutes.

14. The process according to any one of the preceding claims, wherein said granulating of said third dough produces granulates having a total humidity of 18%.

15. The process according to any one of the preceding claims, comprising the following steps:
I)
I.a) leavening a dough comprising a mixture of sourdough, strong flour having a value of W comprised in the 330-350 interval, and water, in a weight ratio equal to 1 : 3 : 1.3, obtained by mixing in an interval comprised between 24 and 26°C, wherein said leavening occurs for 4 hours at 30°C with a relative humidity of 80%;
I.b) leavening a dough comprising the mixture of the dough obtained from step I.a), strong flour having a value of W comprised in the 330-350 interval, and water, in a weight ratio equal to 1 : 3 : 1.3, obtained by mixing in an interval comprised between 24 and 26°C, wherein said leavening occurs for 4 hours at 30°C with a relative humidity of 80%;
I.c) preparing a dough comprising the mixture of the dough obtained from step I.b), strong flour having a value of W comprised in the 330-350 interval, and water, in a weight ratio equal to 1 : 3 : 1.3, wherein the dough obtained from said preparing is left to rest for 12 hours;
I.d) rolling the dough obtained from step I.c), said rolling comprising the steps of leavening the dough obtained from step I.c) and subsequently rolling said leavened dough into rectangles measuring 10 x 5 x 1.5 cm;
I.e) reducing into particles the sheets obtained from step I.d) by mechanical passage, repeated for two cycles, of said sheets in a mill for 15 seconds at 150°C, wherein the particles derived from said reducing into particles have a total humidity level comprised between 4% and 6%;
II)
II.a) leavening a dough comprising a mixture of sourdough, strong flour having a value of W comprised in the 330-350 interval, and water, in a weight ratio equal to 1 : 3 : 1.3, obtained by mixing in an interval comprised between 24 and 26°C, wherein said leavening occurs for 4 hours, at 30°C at a relative humidity of 80%;
II.b) leavening a dough comprising the mixture of the dough obtained from step I.a), strong flour having a value of W comprised in the 330-350 interval, and water, in a weight ratio equal to 1 : 3 : 1.3, obtained by mixing in an interval comprised between 24 and 26°C, wherein said leavening occurs for 4 hours, at 30°C and at a relative humidity of 80%;
II.c) leavening a dough comprising the dough obtained from step II.b), strong flour having a value of W comprised in the 330-350 interval, and water, in a weight ratio equal to 1 : 3 : 1.3, wherein said leavening occurs for 4 hours, at 30°C and with a relative humidity of 80%;
III)
III.a) mixing the dough from step I) and the dough from step II) in a weight ratio of 1:1 so as to obtain said third dough, for a minimum time of 6 minutes;
III.b) granulating the third dough obtained from step III.a), wherein said granulating produces granulates having a total humidity of 18%.

## Patentansprüche

1. Ein Verfahren zur Herstellung von Naturhefe, das den Schritt Mischen mindestens eines ersten und eines zweiten angesäuerten Teigs, um einen dritten Teig zu erhalten, umfasst, wobei der erste und der zweite angesäuerte Teig jeweils Sauerteig, Mehl mit höherem Proteinanteil (strong flour) und Wasser umfassen, und den Schritt Granulieren des dritten Teigs, der durch das Mischen gewonnen wird, um die Naturhefe mit einem Gesamt-Feuchtigkeitsgehalt von 16% oder mehr zu erhalten.

2. Das Verfahren gemäß Anspruch 1, das die folgenden Schritte umfasst:
I.a) Ansäuern eines Teigs, der eine Mischung aus Sauerteig, Mehl mit höherem Proteinanteil (strong flour) und Wasser in einem Gewichtsverhältnis von 0,5-1,5:1,5-4,5:0,6-1,9 umfasst,
I.b) Ansäuern eines Teigs, der eine Mischung aus dem in Schritt
I.a) gewonnenen Teig, Mehl mit höherem Proteinanteil (strong flour) und Wasser in einem Gewichtsverhältnis von 0,5-1,5:1,5-4,5:0,6-1,9 umfasst,
I.c) Herstellen eines Teigs, der eine Mischung aus dem in Schritt I.b) gewonnenen Teig, Mehl mit höherem Proteinanteil (strong flour) und Wasser in einem Gewichtsverhältnis von 0,5-1,5:1,5-4,5:0,6-1,9 umfasst,
I.d) Ausrollen des in Schritt I.c) gewonnenen Teigs, wobei das Ausrollen die Schritte Ansäuerns des in Schritt I.c) gewonnenen Teigs und des anschließenden Ausrollens des angesäuerten Teigs umfasst,
I.e) Zerkleinern der in Schritt I.d) gewonnenen Lagen zu Partikeln,
um den ersten angesäuerten Teig zu erhalten.

3. Das Verfahren gemäß Anspruch 1 oder 2, das folgende Schritte umfasst:
II)
II.a) Ansäuern eines Teigs, der eine Mischung aus Sauerteig, Mehl mit höherem Proteinanteil (strong flour) und Wasser in einem Gewichtsverhältnis von 0,5-1,5:1,5-4,5:0,6-1,9, umfasst,
II.b) Ansäuern eines Teigs, der eine Mischung aus dem in Schritt II.a) gewonnenen Teig, Mehl mit höherem Proteinanteil (strong flour) und Wasser, in einem Gewichtsverhältnis von 0,5-1,5:1,5-4,5:0,6-1,9, umfasst,
II.c) Ansäuern eines Teigs, der den Teig aus Schritt II.b), Mehl mit höherem Proteinanteil (strong flour) und Wasser in einem Gewichtsverhältnis von 0,5-1,5:1,5-4,5:0,6-1,9, umfasst,
um den zweiten angesäuerten Teil zu erhalten.

4. Das Verfahren gemäß einem beliebigen der Ansprüche 1, 2 oder 3, das folgenden Schritt umfasst:
III)
III.a) Mischen des ersten und des zweiten angesäuerten Teigs in einem Gewichtsverhältnis von 1:1, um den dritten Teig zu erhalten.

5. Das Verfahren gemäß einem der obigen Ansprüche, worin das Mehl mit höherem Proteinanteil (strong flour) einen Brotherstellungsfaktor (W) im 330-350 Intervall hat.

6. Das Verfahren gemäß Ansprüchen 2 und 3, worin die Mischungen der Schritte Ia, Ib, IIa und IIb durch Mischen in einem Temperaturintervall zwischen 24 und 26°C erhalten werden.

7. Das Verfahren gemäß Ansprüchen 2 und 3, worin die Ansäuerungen für 4 Stunden bei 30°C und mit einer relativen Feuchtigkeit von 80% stattfinden.

8. Das Verfahren gemäß Anspruch 2, worin der in Schritt I.c) gewonnene Teig 12 Stunden lang stehen gelassen wird, bevor man zu Schritt I.d) weitergeht.

9. Das Verfahren gemäß Anspruch 2, worin die Zerkleinerung zu Partikeln durch mechanischen Durchlauf der Lagen in einer Mühle für 15 Sekunden bei 150°C erfolgt.

10. Das Verfahren gemäß Anspruch 9, worin der erste angesäuerte Teig eine Gesamtfeuchtigkeit zwischen 4 und 6% hat.

11. Das Verfahren gemäß Anspruch 9, worin die Zerkleinerung zu Partikeln über zwei Zyklen wiederholt wird.

12. Das Verfahren gemäß Anspruch 2, worin das Ausrollen rechteckige Teiglagen mit Abmessungen von 10 x 5 x 1,5 cm erzeugt.

13. Das Verfahren gemäß Anspruch 3, worin das Mischen in Schritt III.a) für eine Mindestzeit von 6 Minuten stattfindet.

14. Das Verfahren gemäß einem beliebigen der vorhergehenden Ansprüche, worin das Granulieren des dritten Teigs Granulate mit einer Gesamtfeuchtigkeit von 18% erzeugt.

15. Das Verfahren gemäß einem beliebigen der vorhergehenden Ansprüche, das die folgenden Schritte umfasst:
I)
I.a) Ansäuern eines Teigs, der eine Mischung aus Sauerteig, Mehl mit höherem Proteinanteil (strong flour) mit einem W-Wert im 330-350 Intervall, und Wasser in einem Gewichtsverhältnis von 1:3:1,3 umfasst, gewonnen durch Mischen in einem Intervall zwischen 24 und 26°C, wobei das Ansäuern 4 Stunden lang bei 30°C mit einer relativen Feuchtigkeit von 80% erfolgt,
I.b) Ansäuern eines Teigs, der die Mischung aus dem in Schritt I.a) gewonnenen Teig, Mehl mit höherem Proteinanteil (strong flour) mit einem W-Wert im 330-350 Intervall, und Wasser in einem Gewichtsverhältnis von 1:3:1,3 umfasst, gewonnen durch Mischen in einem Intervall zwischen 24 und 26°C, worin das Ansäuern 4 Stunden lang bei 30°C mit einer relativen Feuchtigkeit von 80% erfolgt,
I.c) Herstellen eines Teigs, der die Mischung aus dem in Schritt I.b) gewonnenen Teig, Mehl mit höherem Proteinanteil (strong flour) mit einem W-Wert im 330-350 Intervall, und Wasser in einem Gewichtsverhältnis von 1:3:1,3, umfasst, worin der Teig, der durch diese Herstellung gewonnen wird, 12 Stunden lang stehen gelassen wird,
I.d) Ausrollen des in Schritt I.c) gewonnenen Teigs, wobei das Ausrollen die Schritte Ansäuern des in Schritt I.c) gewonnenen Teigs und anschließendes Ausrollen des angesäuerten Teigs in Rechtecke mit Abmessungen von 10 x 5 x 1,5 cm umfasst,
I.e) Zerkleinern der in Schritt I.d) gewonnenen Lagen zu Partikeln durch mechanischen Durchlauf, in zwei Zyklen wiederholt, der Lagen in einer Mühle für 15 Sekunden bei 150°C, wobei die Partikel, die durch das Zerkleinern zu Partikeln gewonnen werden, einen Gesamt-Feuchtigkeitsgehalt zwischen 4% und 6% haben,
II)
II.a) Ansäuern eines Teigs, der eine Mischung aus Sauerteig, Mehl mit höherem Proteinanteil (strong flour) mit einem W-Wert im 330-350 Intervall, und Wasser in einem Gewichtsverhältnis von 1:3:1,3 umfasst, gewonnen durch Mischen in einem Intervall zwischen 24 und 26°C, wobei das Ansäuern 4 Stunden lang bei 30°C bei einer relativen Feuchtigkeit von 80% stattfindet,
II.b) Ansäuern eines Teigs, der die Mischung aus dem in Schritt I.a) gewonnenen Teig, Mehl mit höherem Proteinanteil (strong flour) mit einem W-Wert im 330-350 Intervall, und Wasser in einem Gewichtsverhältnis von 1:3:1,3, umfasst, gewonnen durch Mischen in einem Intervall zwischen 24 und 26°C, wobei das Ansäuern 4 Stunden lang bei 30°C und einer relativen Feuchtigkeit von 80% stattfindet,
II.c) Ansäuern eines Teigs, der den in Schritt II.b) gewonnenen Teig, Mehl mit höherem Proteinanteil (strong flour) mit einem W-Wert im 330-350 Intervall, und Wasser in einem Gewichtsverhältnis von 1:3:1,3, umfasst, wobei das Ansäuern 4 Stunden lang bei 30°C und einer relativen Feuchtigkeit von 80% stattfindet,
III)
III.a) Mischen des Teigs aus Schritt I) und des Teigs aus Schritt II) in einem Gewichtsverhältnis von 1:1, um den dritten Teig zu erhalten, über einen Zeitraum von mindestens 6 Minuten,
III.b) Granulieren des dritten Teigs, der in Schritt III.a) gewonnen wurde, wobei das Granulieren Granulate mit einer Gesamtfeuchtigkeit von 18% erzeugt.

## Revendications

1. Procédé de production d'une levure naturelle, comprenant l'étape de mélange d'au moins une première et une deuxième pâte levée pour obtenir une troisième pâte, ladite première et ladite deuxième pâte levée comprenant chacune un levain, une farine de force et de l'eau, et l'étape de granulation de ladite troisième pâte obtenue à partir dudit mélange afin d'obtenir ladite levure naturelle présentant une humidité totale supérieure ou égale à 16 %.

2. Procédé selon la revendication 1, comprenant les étapes suivantes :
I.a) le levage d'une pâte comprenant un mélange de levain, de farine de force et d'eau, dans un rapport pondéral de 0,5 à 1,5/1,5 à 4,5/0,6 à 1,9 ;
I.b) le levage d'une pâte comprenant un mélange de la pâte obtenue dans l'étape I.a), de farine de force et d'eau, dans un rapport pondéral de 0,5 à 1,5/1,5 à 4,5/0,6 à 1,9 ;
I.c) la préparation d'une pâte comprenant un mélange de la pâte obtenue dans l'étape I.b), de farine de force et d'eau, dans un rapport pondéral de 0,5 à 1,5/1,5 à 4,5/0,6 à 1,9 ;
I.d) le laminage de la pâte obtenue dans l'étape I.c), ledit laminage comprenant les étapes de levage de la pâte obtenue dans l'étape I.c) puis le laminage de ladite pâte levée ;
I.e) la réduction en particules des feuilles obtenues dans l'étape I.d) ;
afin d'obtenir ladite première pâte levée.

3. Procédé selon la revendication 1 ou 2, comprenant les étapes suivantes :
II)
II.a) le levage d'une pâte comprenant un mélange de levain, de farine de force et d'eau, dans un rapport pondéral de 0,5 à 1,5/1,5 à 4,5/0,6 à 1,9 ;
II.b) le levage d'une pâte comprenant un mélange de la pâte obtenue dans l'étape II.a), de farine de force et d'eau, dans un rapport pondéral de 0,5 à 1,5/1,5 à 4,5/0,6 à 1,9 ;
II.c) le levage d'une pâte comprenant la pâte de l'étape II.b), une farine de force et de l'eau, dans un rapport pondéral de 0,5 à 1,5/1,5 à 4,5/0,6 à 1,9 ;
afin d'obtenir ladite deuxième pâte levée.

4. Procédé selon l'une quelconque des revendications 1, 2 ou 3, comprenant l'étape suivante :
III)
III.a) le mélange de la première pâte levée et de la deuxième pâte levée dans un rapport pondéral de 1/1 afin d'obtenir ladite troisième pâte.

5. Procédé selon l'une quelconque des revendications précédentes, dans lequel ladite farine de force présente un facteur de fabrication de pain (W) compris dans l'intervalle allant de 330 à 350.

6. Procédé selon les revendications 2 et 3, dans lequel lesdits mélanges des étapes Ia, Ib, IIa et IIb sont obtenus en effectuant le mélange dans un intervalle de températures compris entre 24 °C et 26 °C.

7. Procédé selon les revendications 2 et 3, dans lequel lesdits levages durent 4 heures à 30 °C et à une humidité relative de 80 %.

8. Procédé selon la revendication 2, dans lequel ladite pâte obtenue dans l'étape I.c) est laissée au repos pendant 12 heures avant d'être amenée à l'étape I.d).

9. Procédé selon la revendication 2, dans lequel ladite réduction en particules est réalisée par le passage mécanique desdites feuilles dans un broyeur pendant 15 secondes à 150 °C.

10. Procédé selon la revendication 9, dans lequel ladite première pâte levée présente une humidité totale comprise entre 4 % et 6 %.

11. Procédé selon la revendication 9, dans lequel ladite réduction en particules est répétée pendant deux cycles.

12. Procédé selon la revendication 2, dans lequel ledit laminage produit des feuilles rectangulaires de pâte mesurant 10 x 5 x 1,5 cm.

13. Procédé selon la revendication 3, dans lequel ledit mélange de l'étape III.a) dure au minimum 6 minutes.

14. Procédé selon l'une quelconque des revendications précédentes, dans lequel ladite granulation de ladite troisième pâte produit des granulés présentant une humidité totale de 18 %.

15. Procédé selon l'une quelconque des revendications précédentes, comprenant les étapes suivantes
I)
I.a) le levage d'une pâte comprenant un mélange de levain, de farine de force dont la valeur W est comprise dans l'intervalle allant de 330 à 350 et d'eau, dans un rapport pondéral égal à 1/3/1,3, obtenue en effectuant le mélange dans un intervalle compris entre 24 °C et 26 °C, dans lequel ledit levage dure 4 heures à 30 °C et à une humidité relative de 80 % ;
I.b) le levage d'une pâte comprenant le mélange de la pâte obtenue dans l'étape I.a), une farine de force dont la valeur W est comprise dans l'intervalle allant de 330 à 350 et de l'eau, dans un rapport pondéral égal à 1/3/1,3, obtenue en effectuant le mélange dans un intervalle compris entre 24 °C et 26 °C, dans lequel ledit levage dure 4 heures à 30 °C et à une humidité relative de 80 % ;
I.c) la préparation d'une pâte comprenant le mélange de la pâte obtenue dans l'étape I.b), une farine de force dont la valeur W est comprise dans l'intervalle allant de 330 à 350 et de l'eau, dans un rapport pondéral égal à 1/3/1,3, dans laquelle la pâte obtenue à partir de ladite préparation est laissée au repos pendant 12 heures ;
I.d) le laminage de la pâte obtenue dans l'étape I.c), ledit laminage comprenant les étapes de levage de la pâte obtenue dans l'étape I.c) puis le laminage de ladite pâte levée pour obtenir des rectangles mesurant 10 x 5 x 1,5 cm ;
I.e) la réduction en particules des feuilles obtenues dans l'étape I.d) par le passage mécanique, répété pendant deux cycles, desdites feuilles dans un broyeur pendant 15 secondes à 150 °C, dans laquelle les particules dérivant de ladite réduction en particules présentent un niveau d'humidité totale compris entre 4 % et 6 % ;
II)
II.a) le levage d'une pâte comprenant un mélange de levain, de farine de force dont la valeur W est comprise dans l'intervalle allant de 330 à 350 et d'eau, dans un rapport pondéral égal à 1/3/1,3, obtenue en effectuant le mélange dans un intervalle compris entre 24 °C et 26 °C, dans lequel ledit levage dure 4 heures à 30 °C et à une humidité relative de 80 % ;
II.b) le levage d'une pâte comprenant le mélange de la pâte obtenue dans l'étape I.a), une farine de force dont la valeur W est comprise dans l'intervalle allant de 330 à 350 et de l'eau, dans un rapport pondéral égal à 1/3/1,3, obtenue en effectuant le mélange dans un intervalle compris entre 24 °C et 26 °C, dans lequel ledit levage dure 4 heures à 30 °C et à une humidité relative de 80 % ;
II.c) le levage d'une pâte comprenant la pâte obtenue dans l'étape II.b), une farine de force dont la valeur W est comprise dans l'intervalle allant de 330 à 350 et de l'eau, dans un rapport pondéral égal à 1/3/1,3, dans lequel ledit levage dure 4 heures à 30 °C et à une humidité relative de 80 % ;
III)
III.a) le mélange de la pâte de l'étape I) et de la pâte de l'étape II) dans un rapport pondéral de 1/1 afin d'obtenir ladite troisième pâte, pendant une durée minimale de 6 minutes ;
III.b) la granulation de la troisième pâte obtenue dans l'étape III.a), dans laquelle ladite granulation produit des granulés présentant une humidité totale de 18 %.
